# EUROPEAN PATENT SPECIFICATION

(11) **EP 3 597 081 B1**
(45) Date of publication and mention of the grant of the patent: **24.02.2021**
(21) Application number: 18722252.6
(22) Date of filing: 16.03.2018
(51) Int. Cl.: A47J 31/44, A47J 31/46

(54) **BEVERAGE DISPENSING ARRANGEMENT, SYSTEM INCLUDING SAID ARRANGEMENT AND METHOD FOR OPERATING SAID SYSTEM**
ARRANGEMENT ZUR GETRÄNKEABGABE, SYSTEM MIT SOLCH EINEM ARRANGEMENT UND VERFAHREN ZUR VERWENDUNG DES SYSTEMS
AGENCEMENT DE DISTRIBUTION DE BOISSONS, SYSTÈME COMPRENANT LEDIT AGENCEMENT ET PROCÉDÉ DE FONCTIONNEMENT DUDIT SYSTÈME

(30) Priority: 17.03.2017 PT 2017109975
(43) Date of publication of application: 22.01.2020
(73) Proprietor: Novadelta-Comércio e Industria de Cafés, Lda., 1950-041 Lisboa (PT)
(72) Inventor: NABEIRO, Rui Miguel, 7370-112 Campo Maior (PT); MEDINA MUNDT, Jesús, 1800-098 Lisboa (PT); FIGUEIRA BARROS DOS REIS, Claudia, 1495-130 Lisboa (PT); DE FIGUEIREDO BRANCO, João André, 1885-091 Moscavide (PT)
(74) Representative: Ferreira Pinto, Francisca
(86) International application number: PCT/PT2018/050009
(87) International publication number: WO 2018/169425

(56) References cited:
- EP-A1- 1 686 879
- WO-A1-2012/055765
- WO-A2-2005/002405
- US-A1- 2015 344 285

## Description

### Field of the invention

The present invention refers to the field of systems for distribution of aromatic beverages by means of brewing of a respective edible substance, in particular to the field of systems for distribution of beverages adapted so that can operate in portable manner.

The present invention further refers to a process of operation of a beverage distribution system.

### Background of the invention

The prior art presents several solutions of portable beverage distribution systems, in particular of the backpack type, trolley, or similar.

The documents EP 0866444 B1, EP 1 686 879 A1 and US 2015/244285 disclose cold or hot beverage distribution systems configured with a general backpack-like shape. Said systems comprise fluid pressurization means provided in the backpack-like part and connected by means of a pipe to respective beverage discharge means. In particular, said systems present pumping means that are manually operated, whereby a respective handle is arranged adjacent to the discharge edge of cups dispensing means. Said systems further present a manual discharge disposition provided distanced from said pumping actuation handle.

The documents EP 0583497 B1, WO 95/16634 and WO 96/19406 disclose systems of the same type whereby the discharge actuation means, in particular a manually operable valve, are provided in distal region of a beverage distribution pipe.

The documents WO 95/11853 and EP 1699732 B1 disclose other beverage distribution systems of the same type.

### General description of the invention

The objective of the present invention is to provide a beverage distribution disposition, in particular a disposition configured for being handheld, that provides means for preparing a beverage, including aromatic beverages such as espresso type coffee, tea and similar, by means of mixture of a pressurized flow with a single portion of edible substance supplied to said beverage distribution disposition, by means of a simple construction and, in particular, that provides an ergonomic operation with said single portions while being handheld.

This objective is attained according to the present invention by means of a beverage distribution disposition according to claim 1.

It is preferred when the beverage distribution disposition presents an envelope casing that at least partially confines a single portion collection disposition and is configured for being handheld, whereby the hand position enables opening said collection disposition and is away from a beverage discharge.

It is preferred when said envelope casing presents a characteristic dimension that is approximate to the dimension of a hand.

It is preferred when said envelope casing comprises a second casing region provided in a single piece with a first casing region and adapted so as to support a closing disposition, or provided as a separate piece from said first casing region and adapted so as to comprise at least one of said portion collection disposition and said beverage discharge.

It is preferred when said first and second casing regions jointly define a general angled shape, for example in a general pistol-like shape, or similar.

It is preferred when said first and second casing regions jointly define a substantially closed and hollow shape, adapted for housing a fluid connection inside, and preferentially presenting an entry opening adapted so as to provide introduction of a single portion into said portion collection disposition, and an exit opening adapted so as to provide the exit a single portion.

It is preferred when said first and second casing regions jointly define a substantially closed and hollow shape, adapted for housing said portion disposition collection inside thereof.

It is preferred when said envelope casing is adapted so as to support the movement of said closing disposition around a reference swivelling axis disposed in the front region and below the top region of said envelope casing, so that said closing element can be swivelled around said reference swivelling axis frontwards relative to said front region of said envelop casing.

It is preferred when said closing disposition further presents a retention mechanism that comprises a retention part provided in the edge region of said closing element, and an actuation part provided in a corresponding region of said envelope casing and preferentially configured in the form of an actuation button, whereby said retention mechanism is configured so that can block said closing element when the latter is in a closed position, by means of retention on said envelope casing.

It is preferred when said retention mechanism is provided so that can be actuated by a finger that is different from the finger actuating said actuation element, preferentially by a thumb finger, when said envelope casing is handheld.

A related objective of the present invention is to provide a beverage distribution system, in particular including a beverage distribution disposition, provided with energy autonomy so that can be transported and operated simultaneously, comprising a collection chamber adapted for collecting a single portion of edible substance, for example provided inside of a capsule, whereby said system presents a simple and ergonomic construction in terms of use and portability.

This objective is achieved according to the present invention by means of a system according to claim 13.

It is preferred when the beverage distribution system according to the present invention comprises a supply source of pressurized and heated fluid, and is provided so that can operate in mobile conditions, without connection to an external energy source.

It is preferred when said beverage distribution device further comprises at least one thermal and/or electrical energy storage device.

It is further preferred when said beverage distribution device comprises fluid pressurization means provided as a compressed gas recipient, and in fluid connection with said beverage distribution disposition.

Another objective of the present invention is to provide a process for preparing beverages that provides better ergonomic conditions of use and portability.

This objective is solved according to claim 16.

### Description of the Figures

The invention shall be explained in greater detail hereinafter based upon preferred embodiments thereof, and the attached figures.

The Figures show, in simplified schematic representations:
- Figure 1:: system (1) for distributing beverages according to the present invention;
- Figure 2:: perspective view of a first embodiment of a beverage distribution disposition (1) according to the present invention;
- Figure 3:: side view of the embodiment of beverage distribution disposition (1) according to Figure 2;
- Figure 4:: exploded perspective view of the embodiment of beverage distribution disposition (1) according to Figure 2;
- Figure 5:: side-cut view of the embodiment of beverage distribution disposition (1) according to Figure 2, in a closed position;
- Figure 6:: side-cut view of the embodiment of beverage distribution disposition (1) according to Figure 2, in an open position;
- Figure 7:: exploded perspective view of a second embodiment of beverage distribution disposition (1) according to the present invention;
- Figure 8:: front view and side-cut view, along the cut-plane AA, of the embodiment according to Figure 7, in a closed position;
- Figure 9:: front view and side-cut view, along the cut-plane BB, of the embodiment according to Figure 7, in an open position.

### Detailed description of preferred embodiments of the invention

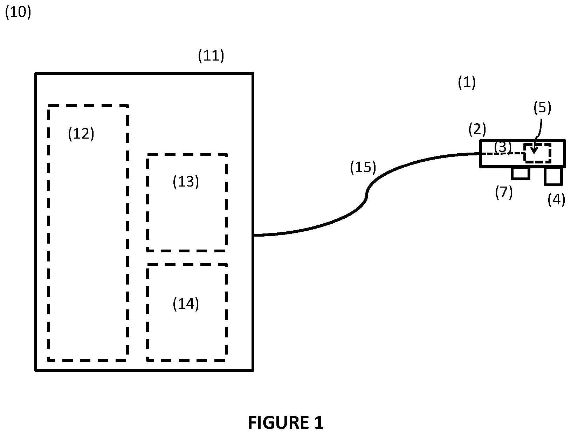

**Figure 1** schematically represents a system (10) for distributing beverages according to the present invention.

As represented, said system (10) comprises a disposition (1) for distribution of beverages that is provided in fluid connection with a fluid supply source (11) disposed upstream and adapted so as to provide a pressurized fluid flow and provided remotely from said beverage distribution disposition (1).

Said fluid supply source (11) comprises fluid storage means (12) adapted so that provide storage of a given quantity of fluid, fluid pressurization means (13) adapted so that can supply a fluid flow at a pressure comprised between 1 and 20 bar, and, optionally, fluid heating means (14) adapted so that can supply a fluid flow at a temperature comprised between 60 and 120 °C.

The system (10) further includes fluid connection means (15) adapted so as to provide a fluid connection over a distance, and preferentially thermally insulated and with an extension smaller than 1,5 m, between said fluid supply source (11) and the beverage distribution disposition (1) provided apart from said fluid supply source (11).

Said beverage distribution disposition (1) presents an envelope casing (2), and a beverage discharge (4) adapted so that provides discharge of beverage.

According to a first inventive aspect, said beverage distribution disposition (1) further presents fluid supply means (3) adapted for connection with said fluid supply source (11) upstream, a portion collection disposition (5) adapted for collection of a single portion of edible substance, and disposed downstream of said fluid supply means (3) and upstream of said beverage discharge (4).

Moreover, said beverage distribution disposition (1) further presents an actuation disposition (7) including a start actuation element (71) adapted so that provides the start of beverage preparation cycle when actuated, whereby said start actuation element (71) is disposed so that can be actuated by the same hand that holds said envelope casing (2) and preferentially configured so that can be actuated by a finger, such as for example in the form of a trigger, or similar.

The beverage distribution disposition (1) according to the present invention thus advantageously provides the possibility of use of single portions of edible substance in the preparation of beverages with a disposition that can be operated in moving conditions, without connection to an external energy source, and the possibility of preparing each beverage being actuated by the same hand that holds the beverage discharge.

In this sense, it is further preferred when said envelope casing (2) presents said start actuation element (71) disposed on a side opposite to the side where there is the entry opening of access to said portion collection disposition (5), preferentially so that can be actuated by the pointing finger, when said beverage distribution disposition (1) is being handheld.

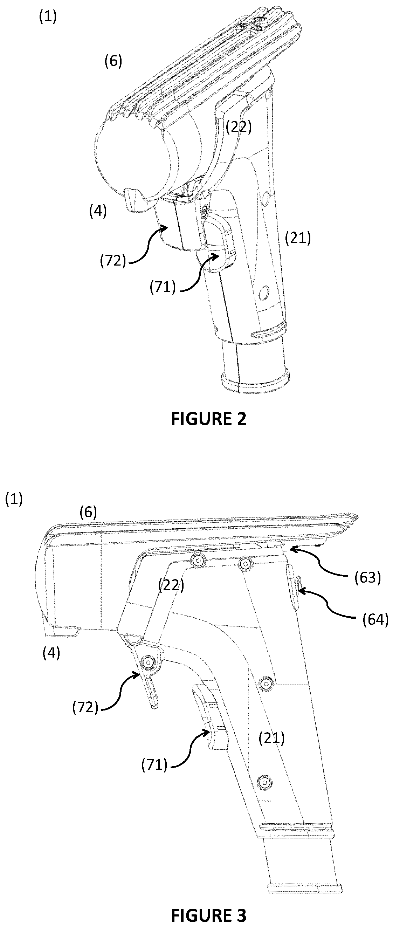

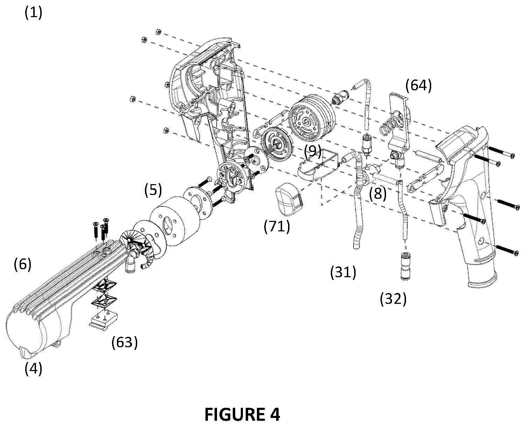

As represented in **Figures 2**, **3** and **4**, the beverage distribution disposition (1) according to the present invention can present the general shape of a handgun, or similar.

As one can observe, the envelope casing (2) is configured so that can be handheld and presents a first and second casing regions (21, 22) provided in angled manner.

In particular, the first casing region (21) is configured in a handgrip shape and presents said start actuation element (71) in a trigger shape. The second casing region (22) partially confines a portion collection disposition (5) adapted for collection of a single portion of edible substance, and disposed downstream of said first fluid connection (3) and upstream of said beverage discharge (4).

There is further provided a closing disposition (6) including a lever-like element adapted so that can be moved relative to said envelope casing (2), as shall be explained in greater detail further below, between an open position where there is provided access to said portion collection disposition (5), and a closed position where said portion collection disposition (5) is confined in liquid tight manner.

It is further preferred when there is provided a protection element (72) disposed so as to prevent that the opening rotation of the closing disposition (6) may hit the finger on said start actuation element (71).

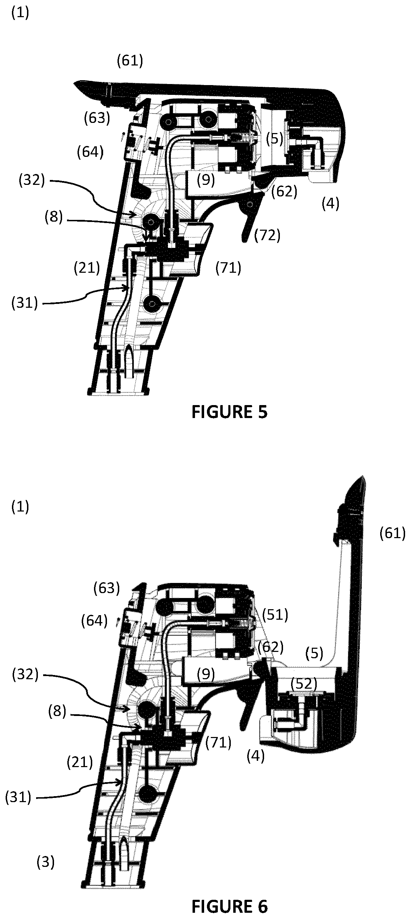

As one can better observe in **Figures 5** and **6**, said closing disposition (6) comprises a closing element (61) that develops along at least most part, preferentially all of the top region of said envelope casing (2), and that is provided as a lever supported so that can swivel around said reference swivel axis (62), between an open position, where provides access to the portion collection disposition (5), and a closed position, where closes said portion collection disposition (5).

It is particularly preferred when said closing element (61) is provided directly connected to said envelope casing (2) by means of a respective edge so that can carry out a swivelling movement around a reference swivel axis (62) arranged in the front region of said envelope casing (2), whereby the free edge of said closing element (61) is provided oriented to the posterior region of envelope casing (2), so that said closing element (61) can be swivelled around said reference swivel axis (62) from a top region of said envelope casing (2), where is located at a closed position, frontwards relative to the front region of said envelope casing (2), until reaching an open position.

It is further preferred when said envelope casing (2) is adapted so that can support the movement of said closing disposition (6) around a reference swivel axis (62) arranged in the front region and below the top region of said envelope casing (2), so that said closing element (6) can be swivelled around said reference swivel axis (62) frontwards relative to the front region of said envelope casing (2).

Moreover, as one can observe, said portion collection disposition (5) is adapted so that can be crossed by pressurized fluid along a direction at least approximately transversal or parallel to the beverage discharge direction, whereby said portion collection disposition (5) is confined upstream by a top wall that presents fluid injection means (51) provided in fluid connection with said first fluid connection (3), and is confined downstream by a base wall that presents beverage discharge means (52) provided in fluid connection with said beverage discharge (4).

According to a preferred embodiment of the beverage distribution disposition (1), there is further provided a distribution valve (8) inside of said envelope casing (2), disposed between said first fluid connection (31) upstream and the fluid injection means (51) for the portion collection disposition (5), whereby said distribution valve (8) is actionable by means of pressure upon said start actuation element (71), for example with the pointing finger of the hand holding the envelope casing (2), so that the fluid passage is released when the start actuation element (71) is pressured.

Moreover, it is further preferred when there is also provided a residues collection disposition (9) provided inside of said envelope casing (2) and adapted so that can collect liquid residues from inside of said portion collection disposition (5), whereby said resides collection disposition (9) is provided in fluid connection downstream with a second fluid connection line (32) configured so that discharges out of said envelope casing (2) of beverage distribution disposition (1), preferentially into a collection recipient provided on said fluid supply source (11).

According to another preferred embodiment, said beverage distribution disposition (1) further presents a retention disposition (63, 64) adapted so that can retain and release said closing disposition (6), whereby said retention disposition (63, 64) preferentially comprises a first retention part (63) and a second actuation part (64) that engages in removable manner on said first retention part (63) and can be disengaged when pressured.

In particular, it is preferred when the retention disposition (63, 64) is provided so that can be actuated with a finger different from the finger that actuated said start actuation element (71), preferentially by the thumb, when said disposition (1) is being handheld.

As shall be readily understood by the expert in the field, the beverage distribution system (10) according to the present invention provides several advantages in its use.

According to the invention, the actuation of the closing disposition (6) and the actuation of the actuation disposition (7) is carried out by a user with the same hand that holds said disposition (1).

It is preferred when the step of providing a beverage preparation system (10) includes holding said beverage distribution disposition (1) with a given hand, and said step of introducing a single portion on said portion collection disposition (5) is carried out with the other hand.

It is preferred when the step of start of supply of pressurized fluid flow to said portion collection disposition (3), includes the actuation of an actuation device (7) provided as a button disposed on a region of a first support structure (6) below of said beverage discharge disposition (4).

It is preferred when the step of actuation of a closing disposition (6), so that said portion collection disposition (5) evolves from a closed position to an open position, including the release of a respective retention on the envelope casing (2), can be carried out with the same hand that holds the beverage distribution disposition (1), and when said actuation of closure of said portion collection disposition (5) can be carried out by the other hand.

It is also preferred when the step of providing a beverage distribution system (10) includes handholding an envelope casing (2) of said beverage distribution disposition (1), and not handholding a fluid supply source (11) provided in fluid connection upstream of said beverage distribution disposition (1).

It is further preferred when the step of actuation of start of supply of a pressurized fluid flow to said portion collection disposition (3), does not include the supply of energy from an energy source that is external to said beverage distribution system (10).

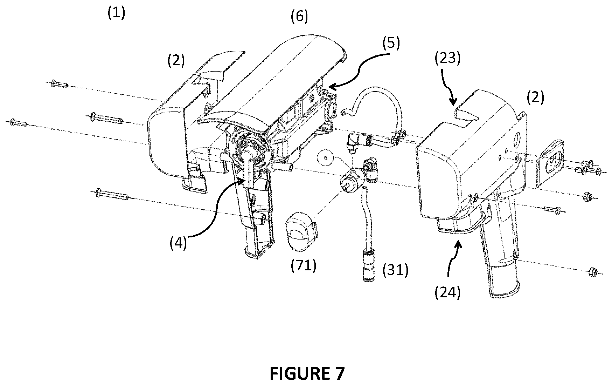

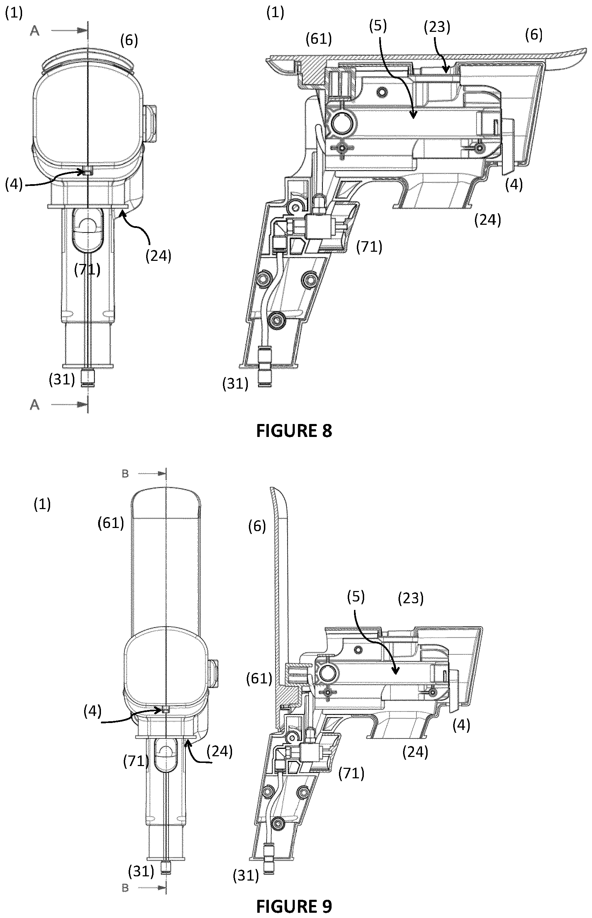

**Figures 7** to **9** represent views of a second embodiment of beverage distribution disposition (1) according to the present invention.

In this case, the envelope casing (2) is still provided with a general form of the type with a general pistol wrist-like shape, and a hollow configuration adapted so that collects a portion collection disposition (5) inside thereof. Said portion collection disposition (5) presents in this case two parts, as generally from the expert in the technical field, and for example disclosed in documents WO 2017/176139 A1 and WO 2017/176140 A1 filed by the author of the present application, so that one herewith abdicates of a more detailed description thereof.

Said portion collection disposition (5) is provided in actuation connection with the closing disposition (6) that in this case comprises only a closing element (61) configured in the form of lever extending over the entire surface of the top region of said envelope casing (2) and adapted so that provides closing of said portion collection disposition (5) by means of said closing element (61) provided so that can be moved in a swivelling movement relative to said envelope casing (2), between an open position where provides access to said portion collection disposition (5), and a closed position where closes said portion collection disposition (5) in a liquid-tight manner.

According to a preferred embodiment, said envelope casing (2) presents an entry opening (23) on the upwards-oriented side, adapted so that provides the entry of each single portion into said portion collection disposition (5), and further an exist opening (24) on the downwards-oriented side, aligned with said portion collection disposition (5) so that provides exit of each single portion out of the beverage distribution disposition (1).

## Claims

1. **Beverage distribution disposition (1)** adapted for preparing beverages by means of a pressurized fluid flow through an individual portion of an edible portion, said beverage distribution disposition (1) comprising:
- an envelope casing (2) presenting a portion configured in a handgrip shape so that can be handheld;
- a fluid connection (31) adapted for connection of a pressurized fluid line that provides fluid connection with an upstream source of supply of pressurized fluid;
- a beverage discharge (4),
- a portion collection disposition (5) adapted for collecting an individual portion of said edible substance, for example provided inside of a capsule, and disposed downstream of said first fluid connection (31) and upstream of said beverage discharge (4),
- a closing disposition (6) adapted so that provides actuation of said portion collection disposition (5) by means of a closing element (61) provided so that can be moved in swivelling movement relative to said envelope casing (2), between an open position where said portion collection disposition (5) is open, and a closed position where said portion collection disposition (5) is closed in a liquid-tight manner,
**characterized in that** said disposition (1) further presents:
- an actuation disposition (7) including a start actuation element (71) adapted so that can provide start of the beverage preparation cycle, whereby said start actuation element (71) is arranged so that can be actuated by the same hand that holds said envelope casing (2) and is configured in trigger-like, button-like, or similar shape, so that can be actuated by a single finger,
whereby the actuation of the closing disposition (6) and the actuation of the actuation disposition (7) can be carried out by a user with the same hand that holds said disposition (1).

2. Disposition (1) according to claim 1, **characterized in that** said start actuation element (71) is provided, preferentially on said envelope casing (2), on a side opposite to the side where there is said closing element (61) in a respective closed position, preferentially so that said start actuation element (71) can be finger actuated, for example by a pointing finger, when said envelope casing (2) is hand held.

3. Disposition (1) according to claim 1 or 2, **characterized in that** said envelope casing (2) is configured for being handheld, and **in that** said portion collection disposition (5) presents a shape and dimensions adapted for collecting an individual portion of edible substance, preferentially provided inside of a capsule.

4. Disposition (1) according to claims 1 to 3, **characterized in that** said envelope casing (2) presents a first casing region (21) adapted so that can be manually held, whereby said first casing region (21) comprises said fluid connection (31), and a second casing region (22) adapted so that supports said portion collection disposition (5).

5. Disposition (1) according to any one of claims 1 to 4, **characterized in that** said closing disposition (6) comprises a closing element (61) provided directly united by means of a respective edge to said envelope casing (2), without intercalary movement transmission elements, so that can carry out a swivelling movement around a swivel reference axis (62) disposed in the front region of said envelope casing (2), whereby the freed edge of said closing element (61) is provided oriented to the posterior region of envelope casing (2), so that said closing element (61) can be swivelled around said reference swivel axis (62) from a top region of said envelope casing (2), frontwards relative to the front region of said envelope casing (2), until reaching an open position.

6. Disposition (1) according to any one of claims 1 to 5, **characterized in that** said closing element (61) is provided as a lever supported so that can swivel around said reference swivelling axis (62) between an open position and a closed position, thereby driving said portion collection disposition (5) into a respective open and closed positions.

7. Disposition (1) according to any one of claims 1 to 6, **characterized in that** said closing element (61) is developing along at least most part, preferentially all of the top region of said envelope casing (2), more preferentially further beyond the distal edge of said top or posterior region.

8. Disposition (1) according to any one of claims 1 to 7, **characterized in that** at least said beverage discharge (4), preferentially also said portion collection disposition (5), are configured so that can be jointly moved, without intercalary movement transmission elements, as a result of actuation of said closing element (61), preferentially are provided in a single piece with said closing element (61).

9. Disposition (1) according to any one of claims 1 to 8, **characterized in that** said second casing part (22) comprises the portion collection disposition (5), and **in that** the beverage discharge (4) and the closing disposition (6) are configured so that can be jointly moved as a result of actuation of said closing element (61), preferentially are provided in a single piece with said closing element (61).

10. Disposition (1) according to any one of claims 1 to 9, **characterized in that** said portion collection disposition (5) is adapted so that can be crossed by a pressurized flow along a direction at least approximately transversal or parallel to the beverage flow direction, whereby said portion collection disposition (5) is confined upstream by a top wall that presents fluid injection means (51) provided in fluid connection with said first fluid connection (3), and is confined downstream by a base wall that presents beverage discharge means (52) provided in fluid connection with said beverage discharge (4).

11. Disposition (1) according to any one of claims 1 to 10, **characterized in that** inside of said envelope casing (2) there is provided at least one of:
- a distribution valve (8) disposed between said first fluid connection (31) upstream and fluid injection means (51) downstream, whereby said distribution valve can be actuated by means of pressure applied upon said start actuation element (71), for example by means of the pointing finger of a hand holding the envelope casing (2), so that the fluid passage is released while the actuation element (71) remains pressured.
- a residues collection disposition (9) adapted so that can collect liquid residues from the interior of said portion collection disposition (5), whereby said residues collection disposition (9) is provided in fluid connection downstream with a second fluid line (32) configured so that discharges outwards of said envelope casing (2).

12. Disposition (1) according to any one of previous claims, **characterized in that** said envelope casing (2) presents an entry opening (23) on the upwards-oriented side thereof, adapted so that provides entry by each single portion into said portion collection disposition (5), and further an exit opening (24) on the downwards-oriented side thereof, aligned with said portion collection disposition (5) so that provides exit of each single portion out of said beverage distribution disposition (1).

13. **System (10) for distributing beverages** such as for example espresso-type coffee and similar aromatic beverages, by means of brewing an edible substance, said system (10) including:
- a source (11) of fluid supply adapted so as to provide a pressurized fluid flow,
- a beverage distribution disposition (1)according to any one of previous claims 1 to 12,
whereby said fluid supply source (11) is provided remote and in fluid communication with said beverage discharge disposition (1),
**characterized**
**in that** said beverage distribution disposition (1) comprises a portion collection disposition (5) of edible substance, and
**in that** said fluid supply source (11) is associated with a transportable support, for example of backpack or trolley type, and provided with energy autonomy so that said system (10) can distribute a plurality of beverages along a given distance autonomously from external energy sources.

14. System (10) according to claim 13, **characterized in that** said fluid supply source (11) comprises:
- fluid storage means (12) adapted so that provide storage of a given fluid amount, preferentially fluid storage means thermally insulated so as to maintain said fluid at a temperature comprised between 60 and 100 °C during a previously defined operation period;
- optionally, fluid storage means (14) adapted so that can supply a fluid flow (FS) at a temperature comprised between 60 and 100 °C;
- fluid pressurization means (13) adapted so that can supply a fluid flow at a pressure comprised between 1 and 20 bar, preferentially above 8 bar,
- fluid connection means (15) adapted so as to provide fluid connection between said fluid supply source (11), and a first fluid line (31) provided inside of said envelope casing (2) and in fluid connection with the portion collection disposition (5) downstream thereof.

15. System (10) according to claims 13 or 14, **characterized in that** said fluid supply source (11) further presents transport means (16), adapted so as to provide transport thereof at the back of an individual, for example in a backpack manner, or to provide displacement thereof by an individual, for example in a vehicle manner.

16. **Process** for distribution of a beverage **characterized in that** includes the following steps:
- Providing a system (10) according to any one of claims 13 to 15, comprising a beverage distribution disposition (1) according to any one of claims 1 to 12,
- actuating a closing disposition (6) so that said portion collection disposition (5) evolves from a closed position to an open position, preferentially including the release of a respective retention on the envelope casing (2);
- introduce a single portion in the portion collection disposition (5);
- actuating said closing disposition (6) so that said portion collection disposition (5) evolves from the open position to the closed position;
- actuating an actuation device (7) so that the injection of pressurized fluid into said portion collection disposition (5) is started;
- beverage discharge through said beverage discharge (4) ;
whereby said actuation of closing disposition (6) and said actuation of actuation device (7) is carried out by a user with the same hand that holds said disposition (1).

17. Process according to claim 16, **characterized in that** said step of introducing a single portion into said portion collection disposition (5) is carried out with one hand while holding said beverage distribution disposition (1) with the other hand of the same user.

18. Process according to claim 16 or 17, **characterized in that** said step of starting the supply of a pressurized fluid flow to said portion collection disposition (5), includes the actuation of an actuation device (7) provided with a button-like, or a trigger-like configuration and disposed on a region, preferentially of said envelope casing (2), in the proximity of said beverage discharge (4).

19. Process according to claims 16 to 18, **characterized in that** said step of actuation of closing disposition (6), so that said portion collection disposition (5) evolves from a closed position to an open position, including the release of respective retention on the envelope casing (2), can be carried out with the same hand that holds the beverage distribution disposition (1), and **in that** said actuation of closing of said portion collection disposition (5) can be carried out by the other hand.

20. Process according to claims 16 to 19, **characterized in that** said step of providing a system (10) of beverage distribution includes handholding an envelope casing (2) of said beverage distribution disposition (1), and not handholding a source of fluid supply (11) provided upstream and in fluid connection with said beverage distribution disposition (1).

21. Process according to claims 16 to 20, **characterized in that** said step of actuation of start of supply of a pressurized fluid flow to said portion collection disposition (5), does not include energy supply from an energy source external to said system (10) of beverage distribution.

## Patentansprüche

1. **Getränkeverteilungseinrichtung (1)** angepasst zur Getränkezubereitung mittels einer unter Druck gesetzten Flüssigkeitsströmung durch eine Einzelmenge einer essbaren Menge, genannte Getränkeverteilungseinrichtung (1) umfassend:
- ein Umschlaggehäuse (2) aufweisend eine Menge festgelegt in Form eines Handgriffs, so um mit der Hand gehalten zu werden;
- eine Flüssigkeitsverbindung (31) angepasst zur Verbindung einer unter Druck gesetzten Flüssigkeitslinie, die eine Flüssigkeitsverbindung mit einer Quelle stromaufwärts der Versorgung von unter Druck gesetzten Flüssigkeit bereitstellt;
- eine Getränkeentladung (4),
- eine Mengensammeleinrichtung (5) angepasst zur Sammlung einer Einzelmenge von genannter essbaren Substanz, z.Bsp. vorgesehen innnerhalb einer Kapsel und angeordnet stromabwärts von genannter ersten Flüssigkeitsverbindung (31) und strom aufwärts von genannter Getränkeentladung (4),
- eine Schließeinrichtung (6) so angepasst, um eine Betätigung von genannter Mengensammeleinrichtung (5) mittels eines Schließelementes (61) bereitzustellen, so vorgesehen, um in einer Schwenkbewegung bzgl. genanntem Umschlaggehäuse (2) bewegt zu werden, zwischen einer offenen Position, wo genannte Mengensammeleinrichtung (5) offen ist, und einer verschlossenen Position, wo genannte Mengensammeleinrichtung (5) flüssigkeitsdicht verschlossen ist, **dadurch gekennzeichnet, dass** genannte einrichtung (1) weiterhin aufweist:
- eine Betätigungseinrichtung (7) beinhaltend ein Startbetätigungselement (71) so angepasst, um ein Start des Getränkezubereitungsablaufes zu versorgen, wobei genanntes Startbetätigungselement (71) so angeordnet, um mittels der selben Hand betätigt zu werden, die genanntes Umschlaggehäuse (2) hält, und in trigger-, knopfartigen oder ähnlichen Form festgelegt ist, so um mittels eines einzigen Fingers betätigt zu werden,
wobei die Betätigung der Schließeinrichtung (6) und die der Betätigungseinrichtung (7) mittels eines Benutzers mit der selben Hand kann durchgeführt werden, die genannte Einrichtung (1) hält.

2. Einrichtung (1) gemäß Anspruch 1 **dadurch gekennzeichnet, dass** genanntes Startbetätigungselement (71) vorzugsweise auf genanntem Umschlaggehäuse (2) vorgesehen ist, an einer Seite gegenüber der Seite, wo genanntes Schließelement (61) in einer entsprechenden verschlossenen Position ist, vorzugsweise so dass genanntes Startbetätigungselement (71) mit dem Finger kann betätigt werden, z.Bsp. mittels eines Zeigefingers, wenn genanntes Umschlaggehäuse (2) mit der Hand gehalten wird.

3. Einrichtung (1) gemäß Anspruch 1 oder 2 **dadurch gekennzeichnet, dass** genanntes Umschlaggehäuse (2) zur Handhaltung festgelegt ist und genannte Mengensammeleinrichtung (5) eine Form und Dimensionen aufweist angepasst zur Sammlung eine Einzelmenge von essbarer Substanz, vorzugsweise versehen innerhalb einer Kapsel.

4. Einrichtung (1) gemäß Ansprüche 1 bis 3 **dadurch gekennzeichnet, dass** genanntes Umschlaggehäuse (2) einen ersten Gehäusebereich (21) aufweist, so angepasst, um manuell gehalten zu werden, wobei genannter erster Gehäusebereich (21) genannte Flüssigkeitsverbindung (31) umfasst, und einen zweiten Gehäusebereich (22), so angepasst, um genannte Mengensammeleinrichtung (5) zu stützen.

5. Einrichtung (1) gemäß einer der Ansprüche 1 bis 4 **dadurch gekennzeichnet, dass** genannte Schließeinrichtung (6) ein Schließelement (61) umfasst vorgesehen direkt zusammengeführt mittels einer entsprechenden Kante von genanntem Umschlaggehäuse (2), ohne wechselnde Bewegungsübertragungselemente, so um eine Schwenkbewegung um eine Schwenkreferenzachse (62) herum angeordnet am Vorderbereich von genanntem Umschlaggehäuse (2) durchzuführen, wobei die befreite Kante von genanntem Schließelement (61) in Richtung des Hinterbereiches des Umschlaggehäuses (2) vorgesehen ist, so dass genanntes Schließelement (61) um genannte Referenzschwenkachse (62) herum von einem Oberbereich von genanntes Umschlaggehäuse (2) kann geschwenkt werden, vorwärts bzgl. des Vorderbereiches von genanntem Umschlaggehäuse (2), um bis eine offene Position zu erreichen.

6. Einrichtung (1) gemäß einer der Ansprüche 1 bis 5 **dadurch gekennzeichnet, dass** genanntes Schließelement (61) als Hebel so gestützt vorgesehen ist, um um genannte Referenzschwenkachse (62) herum zwischen einer offenen und einer verschlossenen Position zu schwenken, dabei führend genannte Mengensammeleinrichtung (5) in entsprechende offene und verschlossene Positionen.

7. Einrichtung (1) gemäß einer der Ansprüche 1 bis 6 **dadurch gekennzeichnet, dass** sich genanntes Schließelement (61) entlang mindestens meistenteils, vorzugsweise des ganzen Oberbereiches von genanntem Umschlaggehäuse (2) entwickelt, vorzugsweise weiter über die entfernte Kante von genanntem Ober- oder Hinterbereich.

8. Einrichtung (1) gemäß einer der Ansprüche 1 bis 7 **dadurch gekennzeichnet, dass** mindestens genannte Getränkeentladung (4), vorzugsweise auch genannte Mengensammeleinrichtung (5), so festgelegt sind, um gemeinsam bewegt zu werden, ohne wechselnde Bewegungsübertragungselemente, infolge einer Betätigung von genanntem Schließelement (61), vorzugsweise in einem Einzelteil mit genanntem Schlieelement (61) vorgesehen sind.

9. Einrichtung (1) gemäß einer der Ansprüche 1 bis 8 **dadurch gekennzeichnet, dass** genannter zweiter Gehäusebereich (22) die Mengensammeleinrichtung (5) umfasst und die Getränkeentladung (4) und die Schließeinrichtung (6) so angeordnet sind, um gemeinsam infolge einer Betätigung von genanntem Schließelement (61) bewegt zu werden, vorzugsweise in einem Einzelteil mit genanntem Schließelement (61) vorgesehen sind.

10. Einrichtung (1) gemäß einer der Ansprüche 1 bis 9 **dadurch gekennzeichnet, dass** genannte Mengensammeleinrichtung (5) so angepasst ist, um mittels einer unter Druck gesetzten Strömung entlang einer Richtung mindestens annähernd schräg oder parallel bzgl. der Getränkeströmungrichtung zu überqueren, wobei genannte Mengensammeleinrichtung (5) stromaufwärts durch eine obere Wand begrenzt ist, die Flüssigkeitsspritzmittel (51) aufweist, vorgesehen in flüssiger Verbindung mit genannter ersten Flüssigkeitsverbindung (3), und stromabwärts durch eine Grundwand begrenzt ist, die Getränkeentladungsmittel (52) aufweist, vorgesehen in flüssiger Verbindung mit genannter Getränkeentladung (4).

11. Einrichtung (1) gemäß einer der Ansprüche 1 bis 10 **dadurch gekennzeichnet, dass** innerhalb von genanntem Umschlaggehäuse (2) mindestens vorgesehen ist:
- ein Verteilungsventil (8) angeordnet zwischen genannter ersten Flüssigkeitsverbindung (31) stromaufwärts und Flüssigkeitsspritzmittel (51) stromabwärts, wobei genanntes Verteilungsventil auf genanntes mittels Druck angewendetes Startbetätigungselement (71) kann betätigt werden, z. Bsp. mittels des Zeigefingers einer Hand, die das Umschlaggehäuse (2) hält, so dass der Flüssigkeitsdurchgang frei gesetzt wird, während das Betätigungselement (71) unter Druck bleibt,
- eine Rückstandssammeleinrichtung (9) so angepasst, um flüssige Rückstände aus dem Inneren von genannter Mengensammeleinrichtung (5) zu sammeln, wobei genannte Rückstandssammeleinrichtung (9) in flüssiger Verbindung stromabwärts mit einer zweiten Flüssigkeitslinie (32) vorgesehen ist, so angeordnet, um von genanntem Umschlaggehäuse (2) auswärts zu entladen.

12. Einrichtung (1) gemäß einer der vorigen Ansprüche **dadurch gekennzeichnet, dass** genanntes Umschlaggehäuse (2) eine Eingangsöffnung (23) an der stromaufwärts gerichteten Seite davon aufweist, so angepasst, um einen Eingang durch jede Einzelmenge in genannte Mengensammeleinrichtung (5) bereitzustellen, und weiterhin eine Ausgangsöffnung (24) an der stromabwärts gerichteten Seite davon, auf gennanter Mengensammeleinrichtung (5) ausgerichtet, so um einen Ausgang von jeder Einzelmenge aus genannte Getränkeverteilungseinrichtung (1) bereitzustellen.

13. **System (10) zur Getränkeverteilung** wie z.Bsp. Espressokaffee und ähnlichen aromatischen Getränke, mittels Brühen einer essbaren Substanz, genanntes System (10) beinhaltend:
- eine Flüssigkeitsversorgungsquelle (11) so angepasst, um eine unter Druck gesetzten Flüssigkeitsströmung bereitzustellen,
- eine Getränkeverteilungseinrichtung (1) gemäß einer der vorigen Ansprüche 1 bis 12,
wobei genannte Flüssigkeitsversorgungsquelle (11) entfernt und in flüssiger Verbindung mit genannter Getränkeverteilungseinrichtung (1)
**dadurch gekennzeichnet,**
**dass** genannte Getränkeverteilungseinrichtung (1) eine Mengensammeleinrichtung (5) von essbarer Substanz umfasst, und
**dass** genannte Flüssigkeitsversorgungsquelle (11) mit einer transportfähigen Stütze verbunden ist, z.Bsp. Rucksack oder Einkaufswagen, und mit einer Energieautonomie so vorgesehen ist, dass genanntes System (10) eine Vielzahl an Getränke entlang eines angegebenen Abstandes selbstständlich von externen Energiequellen verteilen kann.

14. System (10) gemäß Anspruch 13 **dadurch gekennzeichnet, dass** genannte Flüssigkeitsversorgungsquelle (11) umfasst:
- Flüssigkeitsspeichermittel (12) so angepasst, um Lagerung einer gegebenen Flüssigkeitsmenge bereitzustellen, vorzugsweise Flüssigkeitsspeichermittel thermisch so isoliert, um genannte Flüssigkeit während einer vorher definierten Betriebsdauer auf einer Temperatur umfasst zwischen 60 und 100 °C beizubehalten;
- wahlweise, Flüssigkeitsspeichermittel (14) so angepasst, um eine Flüssigkeitsströmung (FS) auf einer Temperatur umfasst zwischen 60 und 100 °C zu liefern;
- Flüssigkeitsdruckmittel (13) so angepasst, um eine Flüssigkeitsströmung auf einem Druck umfasst zwischen 1 und 20 bar zu liefern, vorzugsweise über 8 bar,
- Flüssigkeitsverbindungsmittel (15) so angepasst, um eine Flüssigkeitsverbindug zwischen genannte Flüssigkeitsversorgungsquelle (11) und eine erste Flüssigkeitslinie (31) bereitzustellen, die innerhalb von genanntem Umschlaggehäuse (2) und in flüssiger Verbindung mit der Mengensammeleinrichtung (5) stromabwärts davon vorgesehen ist.

15. System (10) gemäß Ansprüche 13 oder 14 **dadurch gekennzeichnet, dass** genannte Flüssigkeitsversorgungsquelle (11) weiterhin Transportmittel (16) aufweist, so angepasst, um einen Transport hinter eines Einzelstückes davon bereitzustellen, z.Bsp. ein Rucksack, oder eine Verlagerung durch ein Einzelstück davon bereitzustellen, z.Bsp. ein Fahrzeug.

16. **Verfahren** zur Getränkeverteilung **dadurch gekennzeichnet, dass** es folgende Schritte beinhaltet:
- Bereitstellung eines Systems (10) gemäß einer der Ansprüche 13 bis 15 umfassend eine Getränkeverteilungseinrichtung (1) gemäß einer der Ansprüche 1 bis 12,
- Betätigung einer Schließeinrichtung (6), so dass sich genannte Mengensammeleinrichtung (5) von einer verschlossenen Position zu einer offenen Position entwickelt, vorzugsweise beinhaltend die Freisetzung einer entsprechenden Rückhaltung auf genanntem Umschlaggehäuse (2);
- Einführung einer Einzelmenge in die Mengensammeleinrichtung (5) ;
- Betätigung von genannter Schließeinrichtung (6), so dass sich genannte Mengensammeleinrichtung (5) von der offenen Position zur verschlossenen Position entwickelt;
- Betätigung eines Betätigungsgerätes (7), so dass die Enspritzung von unter Druck gesetzter Flüssigkeit in genannte Mengensammeleinrichtung (5) gestartet ist;
- Getränkeentladung durch genannte Getränkeentladung (4);
wobei genannte Betätigung der Schließeinrichtung (6) und genannte Betätigung des Betätigungsgerätes (7) durch einen Benutzer mit der selben Hand durchgeführt wird, die genannte Einrichtung (1) hält.

17. Verfahren gemäß Anspruch 16 **dadurch gekennzeichnet, dass** genannter Schritt zur Einführung einer Einzelmenge in genannte Mengensammeleinrichtung (5) mit einer Hand durchgeführt wird, während die genannte Getränkeverteilungseinrichtung (1) mit der anderen Hand des selben Benutzers gehalten wird.

18. Verfahren gemäß Anspruch 16 oder 17 **dadurch gekennzeichnet, dass** genannter Schritt des Versorgungsstarts einer unter Druck gesetzten Flüssigkeitsströmung zu genannter Mengensammeleinrichtung (5) die Betätigung eines Betätigungsgerätes (7) beinhaltet, das mit einer knopf- oder triggerartigen Konfiguration vorgesehen ist und auf einem Bereich angeordnet, vorzugsweise von genanntem Umschlaggehäuse (2), in der Nähe von genannter Getränkeentladung (4).

19. Verfahren gemäß Ansprüche 16 bis 18 **dadurch gekennzeichnet, dass** genannter Schritt zur Betätigung von genannter Schließeinrichtung (6) mit der selben Hand kann durchgeführt werden, die die Getränkeverteilungseinrichtung (1) hält, so dass sich genannte Mengensammeleinrichtung (5) von einer verschlossenen Position zu einer offenen Position entwickelt, einschließlich die Freisetzung von entsprechender Rückhaltung auf genanntem Umschlaggehäuses (2), und dass genannte Schließbetätigung von genannter Mengensammeleinrichtung (5) durch eine andere Hand kann durchgeführt werden.

20. Verfahren gemäß Ansprüche 16 bis 19 **dadurch gekennzeichnet, dass** genannter Schritt zur Bereitstellung eines Systems (10) einer Getränkeverteilung die Handhaltung eines Umschlaggehäuses (2) von genannter Getränkeverteilungseinrichtung (1) beinhaltet und nicht die Handhaltung einer Flüssigkeitsversorgungsquelle (11) vorgesehen stromaufwärts und in flüssiger Verbindung mit genannter Getränkeverteilungseinrichtung (1).

21. Verfahren gemäß Ansprüche 16 bis 20 **dadurch gekennzeichnet, dass** der Betätigungsschritt des Versorgungsstarts einer unter Druck gesetzten Flüssigkeitsströmung zu genannter Mengensammeleinrichtung (5) keine Energieversorgung aus einer Energiequelle außerhalb von genanntem System (10) von Getränkeverteilung.

## Revendications

1. **Disposition de distribution de breuvage (1)** adaptée à la préparation de breuvages au moyen d'un flux de fluide pressurisé à travers une portion individuelle d'une portion comestible, ladite disposition de distribution de breuvage (1) comprenant :
- un boîtier enveloppe (2) présentant une portion configurée sous une forme de poignée pour pouvoir être portable ;
- une connexion de fluide (31) adaptée à la connexion d'une ligne de fluide pressurisée qui fournit une connexion fluide avec une source en amont de fourniture de fluide pressurisé ;
- une décharge de breuvage (4),
- une disposition de collecte de portion (5) adaptée à la collecte d'une portion individuelle de ladite substance comestible, par exemple l'intérieur fourni d'une capsule, et disposée en aval de ladite première connexion fluide (31) et en amont de ladite décharge de breuvage (4),
- une disposition de fermeture (6) adaptée en vue de fournir l'actionnement de ladite disposition de collecte de portion (5) au moyen d'un élément de fermeture (61) fourni pour pouvoir être déplacé par un mouvement de pivotement par rapport au dit boîtier enveloppe (2), entre une position ouverte où ladite disposition de collecte de portion (5) est ouverte et une position fermée où ladite disposition de collecte de portion (5) est fermée d'une manière étanche, **caractérisée par le fait que** ladite disposition (1) présent en outre :
- une disposition d'actionnement (7) incluant un élément d'actionnement de départ (71) adapté pour pouvoir fournir un départ du cycle de préparation de breuvage, où ledit élément d'actionnement de départ (71) est arrangé pour pouvoir être actionné par la même main qui tient ledit boîtier enveloppe (2) et qui est configuré sous une forme de type gâchette, de type bouton, ou similaire, pour pouvoir être actionné par un seul doigt,
où l'actionnement de la disposition de fermeture (6) et l'actionnement de la disposition d'actionnement (7) peut être mené par un utilisateur avec la même main qui tient ladite disposition (1).

2. Disposition (1) selon la revendication 1, **caractérisée par le fait que** ledit élément d'actionnement de départ (71) est fourni, de préférence sur ledit boîtier enveloppe (2), sur le côté opposé au côté où il y a ledit élément de fermeture (61) sur une position fermée respective, de préférence pour que l'élément d'actionnement de départ (71) puisse être actionné par un doigt, par exemple par l'indicateur, lorsque ledit boîtier enveloppe (2) est tenu à la main.

3. Disposition (1) selon la revendication 1 ou 2, **caractérisée par le fait que** le boîtier enveloppe (2) est configuré en vue d'être portable et **par le fait que** ladite disposition de collecte de portion (5) présente une forme et des dimensions adaptées à la collecte d'une portion individuelle d'une substance comestible, de préférence fournie à l'intérieur d'une capsule.

4. Disposition (1) selon les revendications 1 à 3, **caractérisée par le fait que** ledit boîtier enveloppe (2) présente une première région de boîtier (21) adaptée en vue d'être manuellement tenue, où ladite première région de boîtier (21) comprend ladite connexion de fluide (31) et une seconde région de boîtier (22) adaptée en vue de supporter ladite disposition de collecte de portion (5).

5. Disposition (1) selon une quelconque revendication entre 1 et 4, **caractérisée par le fait que** ladite disposition de fermeture (6) comprend un élément de fermeture (61) fourni directement unifié au moyen d'un bord respectif au dit boîtier enveloppe (2) sans éléments de transmission de mouvement intercalaire afin de pouvoir mener un mouvement de pivotement autour d'un axe de référence de pivotement (62) disposé dans la région frontale dudit boîtier enveloppe (2), où le rebord libre dudit élément de fermeture (61) est fourni orienté vers la région postérieure dudit boîtier enveloppe (2), afin que ledit élément de fermeture (61) puisse être pivoté autour dudit axe de pivotement de référence (62) depuis une région supérieure dudit boîtier enveloppe (2), à l'avant par rapport à la région frontale dudit boîtier enveloppe (2), jusqu'à atteindre une position ouverte.

6. Disposition (1) selon une quelconque revendication entre 1 et 5, **caractérisée par le fait que** ledit élément de fermeture (61) est fourni comme un levier supporté pour pouvoir pivoter autour dudit axe de pivotement de référence (62) entre une position ouverte et une position fermée, conduisant ainsi la disposition de collecte de portion (5) sur les positions, de fermeture et d'ouverture, respectives.

7. Disposition (1) selon une quelconque revendication entre 1 et 6, **caractérisée par le fait que** ledit élément de fermeture (61) est développé le long d'au moins la plupart, de préférence toute de la région supérieure dudit boîtier enveloppe (2), et plus préférentiellement bien au-delà du bord distal de ladite région postérieure ou supérieure.

8. Disposition (1) selon une quelconque revendication entre 1 et 7, **caractérisée par le fait qu'**au moins ladite décharge de breuvage (4), de préférence également ladite disposition de collecte de portion (5), sont configurés pour pouvoir être conjointement déplacées sans éléments de transmission de mouvement intercalaire, en tant que résultat de l'actionnement dudit élément de fermeture (61), de préférence, sont fournies en une seule pièce avec ledit élément de fermeture (61).

9. Disposition (1) selon une quelconque revendication entre 1 et 8, **caractérisée par le fait que** ladite seconde partie du boîtier (22) comprend la disposition de collecte de portion (5) et **par le fait que** la décharge de breuvage (4) et la disposition de fermeture (6) sont configurées pour pouvoir être conjointement déplacées résultant de l'actionnement dudit élément de fermeture (61), de préférence elles sont fournies en une seule pièce avec ledit élément de fermeture (61).

10. Disposition (1) selon une quelconque revendication entre 1 et 9, **caractérisée par le fait que** ladite disposition de collecte de portion (5) est adaptée pour pouvoir être croisée par un flux pressurisé le long de la direction, au moins approximativement, transversale ou parallèle, à la direction de flux du breuvage, où ladite disposition de collecte de portion (5) est confinée en amont par un mur supérieur qui présente des moyens d'injection de fluide (51) fournis en connexion de fluide avec ladite première connexion de fluide (3) et est confinée en aval par un mur de base qui présente des moyens de décharge de breuvage (52) fournis en connexion fluide avec la décharge de breuvage (4).

11. Disposition (1) selon une quelconque revendication entre 1 et 10, **caractérisée par le fait que** l'intérieur dudit boîtier enveloppe (2) y est fournie par au moins :
- une valve de distribution (8) disposée entre ladite première connexion fluide (31) en amont et les moyens d'injection de fluide (51) en aval, où ladite valve de distribution peut être actionnée au moyen d'une pression appliquée sur ledit élément d'actionnement de départ (71), par exemple au moyen du doigt indicateur de la main tenant le boîtier enveloppe (2), afin que le passage de fluide soit libéré alors que l'élément d'actionnement (71) reste pressé,
- une disposition de collecte de résidus (9) adaptée pour pouvoir collecter des résidus liquides depuis l'intérieur de ladite disposition de collecte de portion (5), où ladite disposition de collecte de résidus (9) est fournie en connexion fluide en aval avec une seconde ligne de fluide (32) configurée pour décharger vers l'extérieur dudit boîtier enveloppe (2).

12. Disposition (1) selon une quelconque revendication précédente, **caractérisée par le fait que** ledit boîtier enveloppe (2) présente une ouverture d'entrée (23) sur le côté orienté vers le haut de celui-ci, adaptée afin de fournir une entrée par chaque portion unique dans ladite disposition de collecte de portion (5), et en outre, une ouverture de sortie (24) sur le côté orienté vers le bas de celui-ci, alignée avec la disposition de collecte de portion (5), pour fournir une sortie de chaque portion unique hors de la disposition de distribution de breuvage (1).

13. **Système (10) pour la distribution breuvages** tel que par exemple un café de type expresso et des breuvages aromatiques similaires, au moyen d'infusion d'une substance comestible ; ce système (10) comprenant :
- une source (11) de fourniture de fluide adaptée en vue de fournir un flux de fluide pressurisé,
- une disposition de distribution de breuvage (1) selon une quelconque revendication précédente entre 1 et 12,
où ladite source de fourniture de fluide (11) est fournie à distance et en communication fluide avec ladite disposition de décharge de breuvage (1),
**caractérisée par le fait que** ladite disposition de distribution de breuvage (1) comprend une disposition de collecte de portion (5) d'une substance comestible et
**par le fait que** la source de fourniture de fluide (11) est associée au support transportable, par exemple un sac à dos ou de type chariot et doté d'autonomie énergétique afin que ledit système (10) puisse distribuer une pluralité de breuvages le long d'une distance donnée de manière autonome depuis des sources d'énergie externes.

14. Système (10) selon la revendication 13, **caractérisé par le fait que** ladite source de fourniture de fluide (11) comprend :
- des moyens de stockage de fluide (12) adaptés en vue de fournir un stockage d'une quantité donnée de fluide, de préférence des moyens de stockage de fluide thermiquement isolés afin de conserver ledit fluide à une température comprise entre 60 et 100° C pendant une période antérieure opérationnelle définie ;
- optionnellement, des moyens de stockage de fluide (14) adaptés en vue de fournir un flux de fluide (FS) à une température comprise entre 60 et 100° C ;
- des moyens de pressurisation de fluide (13) adaptés en vue de pouvoir fournir un flux de fluide à une pression comprise entre 1 et 20 bar, de préférence au dessus de 8 bar,
- des moyens de connexion fluide (15) adaptés en vue de fournir une connexion fluide entre ladite source de fourniture de fluide (11) et une première ligne de fluide (31) fournie à l'intérieur dudit boîtier enveloppe (2) et dans une connexion fluide avec la disposition de collecte de portion (5) en aval de celle-ci.

15. Système (10) selon la revendication 13 ou 14, **caractérisé par le fait que** ladite source de fourniture de fluide (11) présente en outre des moyens de transport (16) adaptés en vue de fournir le transport de celui-ci à l'arrière d'un individu, par exemple à travers un sac à dos, ou en vue de fournir le déplacement de celui-ci par un individu, par exemple à travers un véhicule.

16. **Processus** de distribution d'un breuvage, **caractérisé par le fait qu'**il inclut les étapes suivantes :
- fourniture d'un système (10) selon une quelconque revendication entre 13 et 15, comprenant la disposition de distribution de breuvage (1) selon une quelconque revendication entre 1 et 12,
- actionnement une disposition de fermeture (6) afin que ladite disposition de collecte de portion (5) évolue d'une position fermée vers une position ouverte, de préférence en incluant la diffusion d'une rétention respective sur le boîtier enveloppe (2) ;
- introduction d'une seule portion dans la disposition de collecte de portion (5) ;
- actionnement de ladite disposition fermée (6) afin que la disposition de collecte de portion (5) évolue d'une position ouverte vers une position fermée ;
- actionnement d'un dispositif d'actionnement (7) afin que l'injection d'un fluide pressurisé dans ladite disposition de collecte de portion (5) débute ;
- décharge de breuvage à travers ladite décharge de breuvage (4) ;
où ledit actionnement de la disposition de fermeture (6) et ledit actionnement du dispositif d'actionnement (7) sont menés par un utilisateur avec la même main qui tient ladite disposition (1).

17. Processus selon la revendication 16, **caractérisée par le fait que** ladite étape d'introduction d'une portion unique dans une disposition de collecte de portion (5) est menée par une main tout en tenant ladite disposition de distribution de breuvage (1) avec l'autre main du même utilisateur.

18. Processus selon la revendication 16 ou 17, **caractérisé par le fait que** ladite étape du départ de la fourniture d'un flux de fluide pressurisé vers ladite disposition de collecte de portion (5) inclut l'actionnement d'un dispositif d'actionnement (7) fourni avec une configuration de type bouton ou de type gâchette et disposé sur une région, de préférence dudit boîtier enveloppe (2), à proximité de ladite décharge de breuvage (4).

19. Processus selon les revendications 16 à 18, **caractérisé par le fait que** ladite étape d'actionnement de la disposition de fermeture (6), afin que ladite disposition de collecte de portion (5) évolue depuis une position fermée vers une position ouverte, incluant la libération de la rétention respective sur le boîtier enveloppe (2), peut être menée avec la même main qui tient la disposition de distribution de breuvage (1) et **par le fait que** l'actionnement de la fermeture de ladite disposition de collecte de portion (5) peut être mené par l'autre main.

20. Processus selon les revendications de 16 à 19, **caractérisé par le fait que** ladite étape de fourniture d'un système (10) de distribution de breuvage inclut la prise à la main d'un boîtier enveloppe (2) de ladite disposition de distribution de breuvage (1) et non la prise à la main d'une source de fourniture de fluide (11) fournie en amont et en connexion fluide avec la disposition de distribution de breuvage (1).

21. Processus selon les revendications 16 à 20, **caractérisé par le fait que** ladite étape d'actionnement du départ de la fourniture d'un flux de fluide pressurisé vers la disposition de collecte de portion (5) n'inclut pas l'alimentation en énergie depuis une source d'énergie externe vers ledit système (10) de distribution de breuvage.
